Europäisches Patentamt

European Patent Office (11) Veröffentlichungsnummer: **0 182 025**

Office européen des brevets **B1**

(19)

(12) **EUROPÄISCHE PATENTSCHRIFT**

(45) Veröffentlichungstag der Patentschrift:
03.05.89

(51) Int. Cl.⁴: **G 11 B 21/20**

(21) Anmeldenummer: **85111563.4**

(22) Anmeldetag: **13.09.85**

(54) Vorrichtung zum Andrücken mindestens eines elektromagnetischen Wandlerkopfes.

(30) Priorität: **15.11.84 DE 3441848**

(43) Veröffentlichungstag der Anmeldung:
**28.05.86 Patentblatt 86/22**

(45) Bekanntmachung des Hinweises auf die Patenterteilung:
**03.05.89 Patentblatt 89/18**

(84) Benannte Vertragsstaaten:
**DE FR GB IT NL SE**

(56) Entgegenhaltungen:
**DE-A- 2 023 020**
**DE-A- 2 151 148**
**DE-A- 2 534 205**
**DE-A- 3 033 662**
**FR-A- 2 522 430**
**US-A- 4 340 918**

(73) Patentinhaber: **Nixdorf Computer Aktiengesellschaft, Fürstenallee 7, D-4790 Paderborn (DE)**

(72) Erfinder: **Holland-Letz, Günter, Antoniusstrasse 17a, D-4790 Paderborn (DE)**

(74) Vertreter: **Schaumburg, Thoenes & Englaender, Mauerkircherstrasse 31 Postfach 86 07 48, D-8000 München 80 (DE)**

Beschreibung

Die Erfindung betrifft eine Vorrichtung nach dem Oberbegriff des Patentanspruchs 1.

Bei elektromagnetischen Aufzeichnungs-, Lösch- und/oder Wiedergabegeräten sind verschiedene Möglichkeiten bekannt, einen Aufzeichnungsträger mit einem elektromagnetischen Wandlerkopf in Berührung zu bringen. Es kann entweder der Aufzeichnungsträger an den Wandlerkopf oder der Wandlerkopf an den Aufzeichnungsträger angedrückt werden. Letztere Möglichkeit hat sich besonders bei relativ steifen Aufzeichnungsträgern, wie Magnetkarten, als besonders vorteilhaft erwiesen, da der Wandlerkopf bei entsprechender Führung dann auch einer veränderlichen Oberflächenkontur des Aufzeichnungsträgers folgen kann. Dies ist besonders bei Magnetkarten als Aufzeichnungsträger von Bedeutung, da diese infolge ihres Gebrauchs und aufgrund der bisweilen eingeprägten Schriftzeichen häufig nicht mehr eben sind.

Für diesen Anwendungsfall ist bereits aus der GB-B 2 115 597 eine Vorrichtung zum Andrücken der für jede Magnetspur separaten elektromagnetischen Wandlerköpfe eines Vielfachmagnetkopfes an eine relativ zu ihm bewegte Magnetkarte bekannt. Bei dieser Vorrichtung ist jeder einzelne Wandlerkopf mit einer Aussparung versehen, in der ein Andruckhebel befestigt ist. Dieser ist als in Bewegungsrichtung des Aufzeichnungsträgers verlaufender Blechstreifen mit Flächenerstreckung parallel zur Aufzeichnungsträgerebene ausgebildet. Er ist nahe seinem freien Ende mit einer Bohrung versehen, mit der er an einem konischen Stift gelagert ist. In unmittelbarer Nähe des Wandlerkopfes ist im Andruckhebel ein Langloch vorgesehen, mit dem der Andruckhebel an einem Führungsstift in Andruckrichtung des Wandlerkopfes verschieblich geführt ist, um die Bewegung des Wandlerkopfes quer zur Bewegungsrichtung des Aufzeichnungsträgers zu begrenzen. Der Andruckhebel wird mit einer Blattfeder mit Angriffspunkt in Nähe des Wandlerkopfes in Richtung zum Aufzeichnungsträger hin belastet. Das freie Ende der Blattfeder drückt mit einer an einer Kuppe zentral angeordneten, halbkugelförmigen, punktförmigen Erhebung im Idealfall mittig auf den Andruckhebel. Es soll dadurch erreicht werden, daß der Andruckhebel auf seiner Längsachse punktuell belastet wird, um auch eine gewisse Beweglichkeit des Wandlerkopfes um die Andruckhebellängsachse zu gestatten. Diese Bewegungsfreiheit des Wandlerkopfes ist erwünscht, damit sich dieser hinsichtlich seiner Lage auch der Oberfläche von Aufzeichnungsträgern anpassen kann, die quer zu ihrer Bewegungsrichtung gekrümmt sein können.

Diese bekannte Andruckvorrichtung ist kompliziert aufgebaut und benötigt einen hohen Fertigungsaufwand. Der Andruckhebel ist mit dem Wandlerkopf fest verbunden, und bei einem Wechsel des Wandlerkopfes muß auch der Andruckhebel erneuert werden.

Aus der DE-A 3 033 662 ist es bekannt, einen Wandlerkopf zum Abtasten von Magnetkarten in einem Führungsschacht senkrecht zur Transportebene quer zur Transportrichtung mit Spiel und in Transportrichtung ohne Spiel zu führen, wobei er um eine in Transportrichtung liegende Achse kippbar ist. Eine Führung dieser Art muß sehr genau gefertigt sein, weil bereits kleine Verschwenkungen des Wandlerkopfes um eine Achse quer zur Bewegungsrichtung des Aufzeichnungsträgers den Luftspalt aus seiner optimalen Abtaststellung herausbringen. Durch die Bewegung des Aufzeichnungsträgers wird aber der Wandlerkopf mit relativ hoher Kraft einmal an die eine und dann an die andere Führungsfläche des Führungsschachtes gedrückt, und dabei ist ein wenn auch nur geringfügiges Verkanten nicht zu vermeiden. Außerdem kann sich der Wandlerkopf in dem Führungsschacht z. B. durch Verschmutzung der Gleitflächen festsetzen.

Aus der US-A 4 340 918 ist es bekannt, den Wandlerkopf eines Magnetbandspeichers an zwei ortsfesten Stiften um eine Achse drehbar zu lagern, die parallel zur Laufrichtung des Magnetbandes liegt. Dadurch kann sich der Wandlerkopf Verwerfungen des Magnetbandes anpassen, die trotz der gespannten Führung des Magnetbandes quer zu dessen Laufrichtung vorhanden sein können. Diese Lagerung des Wandlerkopfes erfordert eine sehr genaue Justierung. Eine Vorrichtung zum Andrücken des Wandlerkopfes an das Magnetband ist hier aber nicht vorgesehen.

Es ist daher Aufgabe der Erfindung, eine einfache, präzise und funktionssichere Vorrichtung zum Andrücken mindestens eines elektromagnetischen Wandlerkopfes an einen relativ zu ihm bewegten Aufzeichnungsträger anzugeben, mit der eine optimale Anlage des Wandlerkopfes selbst an gekrümmten Aufzeichnungsträgern gewährleistet ist.

Diese Aufgabe wird für eine Vorrichtung eingangs genannter Art erfindungsgemäß dadurch gelöst, daß der Wandlerkopf mit an ihm angebrachten Lagerzapfen am Andruckhebel gehalten ist, die im angedrückten Zustand des Wandlerkopfes eine parallel zur Bewegungsrichtung des Aufzeichnungsträgers liegende Schwenkachse definieren und in Führungsschlitzen zweier Führungsbleche mit Flächenerstreckung normal zur Ebene des Aufzeichnungsträgers sowie quer zu dessen Bewegungsrichtung in Andruckrichtung verschieblich geführt sind.

Bei der Erfindung ist der Wandlerkopf selbst um die Schwenkachse seiner Lagerzapfen schwenkbar, so daß dadurch auch bei stark gekrümmten Aufzeichnungsträgern eine optimale Anlage des Wandlerkopfes an dem Aufzeichnungsträger gewährleistet ist. Durch die Schwenkbarkeit wird, im Gegensatz zum Stand der Technik, die Führungsgenauigkeit des Wandlerkopfes quer zur Bewegungsrichtung des Aufzeichnungsträgers nicht beeinträchtigt, da die die Schwenkbewegung ermöglichenden Lagerzapfen nicht am Führungshebel, sondern am Wandlerkopf vorgesehen sind und sehr exakt geradlinig geführt werden können. Alle den Wandlerkopf führenden Kräfte greifen an den Lagerzapfen an, da diese an dem Andruckhe-

bel gehalten sind. Die präzise Führung quer zur Bewegungsrichtung des Aufzeichnungsträgers erfolgt in Führungsschlitzen der stationären Führungsbleche gleichfalls mit den Lagerzapfen. Dieser Mechanismus kann mit äußerst einfachen Stanzteilen verwirklicht werden, wobei dann der Andruckhebel mit seiner Fläche in Bewegungsrichtung des Aufzeichnungsträgers und senkrecht zu diesem liegt, während die Führungsbleche quer zu ihm stehen. Besondere Führungsschächte sind nicht erforderlich, und der wesentliche Nachteil der Ungenauigkeit wird durch eine erheblich sicherere Konstruktion vermieden.

Die Erfindung hat darüber hinaus den Vorteil, daß ein defekt gewordener Wandlerkopf sehr leicht ausgetauscht werden kann, ohne daß damit auch gleichzeitig der Andruckhebel ausgewechselt werden muß. Daraus ergeben sich im Vergleich zum Stand der Technik günstigere Reparatur- und Wartungskosten.

Besonders vorteilhaft kann die Erfindung zum Andrücken und Führen der einzelnen elektromagnetischen Wandlerköpfe eines Mehrfachmagnetkopfes bei Magnetkartenlesegeräten mit mehreren Magnetspuren angewandt werden. Da die Wandlerköpfe voneinander unabhängig angedrückt und sehr exakt geführt werden können, kommen sie an jeder einzelnen Magnetspur entsprechend exakt zur Anlage. Dies ist bei Anwendung der Erfindung selbst bei stark unregelmäßigen Magnetkarten der Fall.

In einer bevorzugten Ausbildung der Erfindung ist der Andruckhebel im wesentlichen U-förmig ausgebildet, wobei das freie Ende des einen Schenkels nahe der Aufzeichnungsträgerebene schwenkbar gelagert ist und das freie Ende des anderen Schenkels den Wandlerkopf trägt. Da der Wandlerkopf normal zum Aufzeichnungsträger an diesen angedrückt werden muß, ist es einerseits erforderlich, daß der Andruckhebel nahe der Aufzeichnungsträgerebene schwenkbar gelagert ist. Andererseits muß der Andruckhebel zur Führung des Wandlerkopfes eine bestimmte Mindestlänge haben, um eine möglichst geradlinige Andruckbewegung zu erzielen. Die U-förmige Ausbildung des Andruckhebels ermöglicht es somit, daß der Raum in Nähe der Aufzeichnungsträgerebene, der sonst von dem Andruckhebel beansprucht wird, anderweitig, beispielsweise für die Andrucktransportrollen, genützt werden kann, so daß sich insgesamt kompakte Abmessungen für ein derartiges Gerät ergeben.

Vorteilhaft ist der den Wandlerkopf tragende Schenkel gabelförmig ausgebildet, wobei in den Gabelenden die Lagerzapfen des Wandlerkopfes angeordnet sind. Diese Ausbildung des Andruckhebels ermöglicht es, daß der im Innern der Gabel angeordnete Wandlerkopf ohne Anschlagbegrenzung frei schwenken kann.

Vorzugsweise ist der Andruckhebel nahe seinem freien Ende mit einer Anschlagnase versehen, die seinen Schwenkweg zum Aufzeichnungsträger hin begrenzt. Da der Andruckhebel durch Federkraft zum Aufzeichnungsträger hin beaufschlagt ist, kann diese Anschlagnase den Wandlerkopf in einer bestimmten Lage am Rande des Bewegungsbereichs des Aufzeichnungsträgers festhalten, so daß der Wandlerkopf zu den Zeitpunkten, zu denen gerade kein Aufzeichnungsträger an ihm anliegt, nicht an der Transporteinrichtung schleift, was zu einem unnötigen Verschleiß des Wandlerkopfes und der Transporteinrichtung führen würde.

In einer weiteren Ausbildung ist der Andruckhebel ein flächiges Segment mit Flächenerstreckung normal zur Ebene des Aufzeichnungsträgers. Daraus ergibt sich der Vorteil, daß mehrere Wandlerköpfe auf engstem Raum nebeneinander angeordnet werden können und daß die Wandlerköpfe dennoch schwingungsfrei geführt werden können, da die Andruckhebel aufgrund ihrer Formgebung in Andruckrichtung des Wandlerkopfes eine hohe Biegesteifigkeit haben.

In einer weiteren Weiterbildung der Erfindung ist die Dicke des Andruckhebels zumindest im Bereich der Lagerzapfenhalterung kleiner als der Durchmesser der Lagerzapfen des Wandlerkopfes. Dies hat den Vorteil, daß die Lagerzapfen mittels der Führungselemente unmittelbar an den Punkten in Andruckrichtung verschieblich geführt werden können, an denen sie auch am Andruckhebel gehalten sind, so daß die Lagerzapfen des Wandlerkopfes sehr kurz ausgebildet sein können, was zu kompakten Abmessungen einer derartigen Andruckvorrichtung beiträgt.

In einer weiteren Ausbildung des Erfindungsgedankens ist mindestens ein Lagerzapfen eines Wandlerkopfes an seiner Umfangsfläche mit mindestens einer in Umfangsrichtung verlaufenden Erhebung versehen, die in einer entsprechenden Aussparung des Andruckhebels geführt ist. Daraus ergibt sich der Vorteil, daß der Wandlerkopf in axialer Richtung seiner Lagerzapfen spielfrei gelagert werden kann, wobei er dennoch um die von seinen Lagerzapfen definierte Schwenkachse verschwenkbar bleibt.

Vorteilhaft ist der Andruckhebel an einer Schwenkachse mittels eines Langloches gelagert, dessen Längskanten in Richtung normal zur Ebene des Aufzeichnungsträgers konvergieren und an einem Langlochende einen Abstand zueinander haben, der kleiner als der Durchmesser der Schwenkachse ist. Diese Art der Andruckhebellagerung stellt eine äußerst kostengünstige spielfreie Lagerung dar, da das Langloch nur ausgestanzt zu werden braucht. Konvergieren die beiden Längskanten des Langloches beispielsweise in Richtung zur Aufzeichnungsträgerebene hin, so muß der Andruckhebel mit Hilfe einer separaten Feder, die in der Nähe des Langloches an dem Andruckhebel angreift, in von der Aufzeichnungsträgerebene abgewandter Richtung belastet werden, um die Längskanten des Langloches an der Schwenkachse zur Anlage zu bringen. Divergieren dagegen die Längskanten des Langloches in Richtung zur Aufzeichnungsträgerebene hin, so ist keine eigene zusätzliche Feder erforderlich, da durch die Federkraft, die den Andruckhebel in Richtung zum Aufzeichnungsträger hin beaufschlagt, gleichzeitig das Andrücken der Langlochlängskanten an die Schwenkachse vorgenommen wird.

Vorzugsweise ist der Andruckhebel durch eine Zugfeder zum Aufzeichnungsträger hin belastet, da die Verwendung einer Zugfeder hinsichtlich Raumbedarf bei U-förmigem Andruckhebel unproblematisch ist.

Vorteilhaft sind die Führungsbleche mittels an ihren etwa normal zur Ebene des Aufzeichnungsträgers verlaufenden Kanten angeordneter Befestigungselemente querbeweglich geführt. Dabei können die Führungsbleche duch eine Querfeder in Richtung quer zur Bewegungsrichtung des Aufzeichnungsträgers beaufschlagt sein, um eine genau definierte Lage einzunehmen.

In einer Weiterbildung der Erfindung sind in den Führungsblechen Aussparungen vorgesehen, in denen der Andruckhebel in Andruckrichtung verschieblich geführt ist. Daraus ergibt sich der Vorteil, daß mit Hilfe der Führungsbleche nicht nur die Lagerzapfen des Wandlerkopfes, sondern auch zusätzlich der Andruckhebel geführt wird.

In weiterer Ausbildung des Erfindungsgedankens sind den Führungsschlitzen Federelemente zugeordnet, die die Lagerzapfen an jeweils eine Führungsschlitzinnenwand andrücken. Daraus ergibt sich der Vorteil, daß etwaige Fertigungstoleranzen der Führungsschlitze und der Lagerzapfen keinen negativen Einfluß auf die Führungsgenauigkeit der Wandlerköpfe haben, da die Lagerzapfen der Wandlerköpfe nun jeweils zwischen einer Führungsschlitzinnenwand und dem zugeordneten Federelement spielfrei geführt werden.

Da die Federelemente die Lagerzapfen mit einer bestimmten Federkraft an jeweils eine Führungsschlitzinnenwand andrücken, entsteht beim Verschieben der Lagerzapfen in den Führungsschlitzen eine kleine Reibkraft, wodurch etwaige Schwingungen des Wandlerkopfes gedämpft werden.

Besonders vorteilhaft haben sich stab- bzw. blattförmige Federelemente erwiesen, da die Lagerzapfen an deren Längsseiten bzw. -kanten gut entlanggleiten können.

Bei einer Vorrichtung zum Andrücken mehrerer elektromagnetischer Wandlerköpfe an einen relativ zu ihnen bewegten Aufzeichnungsträger sind in einer Weiterbildung der Erfindung mehrere stab- bzw. blattförmige Federelemente durch eine gemeinsame sie verbindende Halterung zu einem Federkamm vereinigt. Dies hat den Vorteil, daß die einzelnen Federelemente nicht in mühseliger Kleinarbeit an den Führungsschlitzen angebracht werden müssen, sondern daß der gesamte Federkamm als ein Bauteil am Führungsblech befestigt werden kann.

Im folgenden wird ein Ausführungsbeispiel der Erfindung bei Anwendung in einem Magnetkartenlesegerät näher erläutert. Es zeigen:

Fig. 1 den Längsschnitt eines Magnetkartenlesegerätes gemäß der Schnittlinie I–I von Fig. 6,

Fig. 2 die Haltung eines elektromagnetischen Wandlerkopfes in den Gabelenden eines Andruckhebels,

Fig. 3 den Detailausschnitt D von Fig. 2,

Fig. 4 eine Draufsicht auf den in Fig. 2 gezeigten Teil des Andruckhebels samt elektromagnetischem Wandlerkopf,

Fig. 5 die Ansicht A auf ein Führungsblech samt Federkamm von Fig. 1 und

Fig. 6 eine Draufsicht auf das Magnetkartenlesegerät.

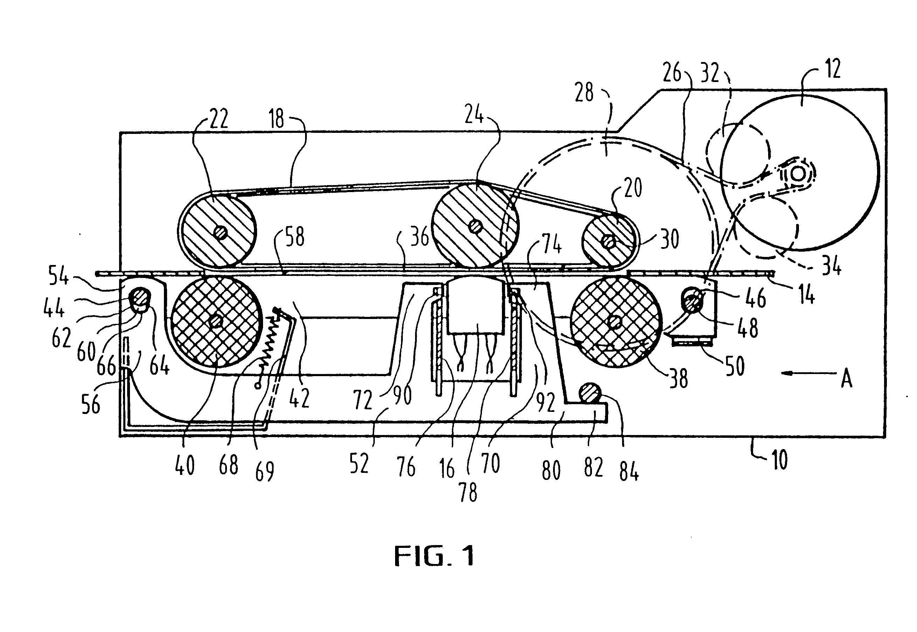

Fig. 1 zeigt ein Magnetkartenlesegerät mit einem Gehäuse 10. In diesem sind im wesentlichen eine Transportvorrichtung samt Antriebsmotor 12 für eine Magnetkarte 14 und eine Vorrichtung zum Andrücken elektromagnetischer Wandlerköpfe 16 (nur einer dargestellt) an eine relativ zu ihnen bewegte Magnetkarte 14 angeordnet. Die Transportvorrichtung umfaßt dabei ein Förderband 18, das über eine Antriebsrolle 20 angetrieben, an einer Umlenkrolle 22 umgelenkt und mit einer Stützrolle 24 zusätzlich geführt wird. Die Antriebsrolle 20 wird ihrerseits von dem Antriebsmotor 12 über einen Antriebsriemen 26, ein Riemenrad 28 und eine Antriebsachse 30 angetrieben. Um einen exakten Gleichlauf des Förderbandes 18 zu ermöglichen, wird der Antriebsriemen 26 durch Spannrollen 32 und 34 vorgespannt. Zum Transport der Magnetkarte 14 durch das Förderband 18 ist es erforderlich, daß die Magnetkarte 14 an dieses angedrückt wird. Dies erfolgt am Anfang und am Ende des Bewegungskanals 36 der Magnetkarte 14 durch Andruckrollen 38 und 40. Im gesamten übrigen Abschnitt des Bewegungskanals 36 wird die Magnetkarte 14 mit einer Andruckleiste 42 an das Förderband 18 angedrückt. Da der Reibwert und die Andruckfläche der Magnetkarte 14 mit dem Förderband 18 wesentlich größer ist als mit der Andruckleiste 42, wird die Magnetkarte 14 mit der translatorischen Geschwindigkeit des Förderbandes 18 im Bewegungskanal 36 an der Andruckleiste 42 entlang bewegt. Diese ist an ihrem in der Figur linken Ende an einer Schwenkachse 44 gelagert. An ihrem in der Figur rechten Ende ist sie mit einem Langloch 46 an einer Achse 48 geführt und wird mittels einer Blattfeder 50 in Richtung zum Bewegungskanal 36 hin belastet.

Im Laufe des Transportes der Magnetkarte 14 durch den Bewegungskanal 36 hindurch wird diese an den elektromagnetischen Wandlerköpfen 16 (nur einer dargestellt) vorbeigeführt, die mittels der vorstehend erwähnten Andruckvorrichtung an der Magnetkarte 14 zur Anlage kommen. Die Andruckvorrichtung umfaßt als Hauptbestandteil einen Andruckhebel 52, der im wesentlichen U-förmig ausgebildet ist, wobei das freie Ende 54 des einen Schenkels 56 nahe der Magnetkartenebene 58 an der Schwenkachse 44 mittels eines Langloches 60 schwenkbar gelagert ist, dessen Längskanten 62 und 64 zur Magnetkartenebene 58 hin divergieren und an dem der Aufzeichnungsträgerebene 58 abgewandten Langlochende 66 einen Abstand zueinander haben, der kleiner als der Durchmesser der Schwenkachse 44 ist. Um eine in Bewegungsrichtung der Magnetkarte 14 spielfreie Lagerung des Andruckhebels 52 zu erreichen, müssen die Längskanten 62 und 64 des Langloches 60 an die Schwenkachse 44 angedrückt werden. Dies wird bei dieser Langlochanordnung, bei der die Längskanten 62 und 64 zur Magnetkartenebene 58 hin divergieren, durch eine Zugfeder 68 erreicht, die den Andruckhebel 52 zur Magnetkartenebene 58 hin belastet. Es ist also bei dieser Langlochausrichtung keine eigene Federanordnung für die Lagerung des Andruckhebels 52 erforderlich. Für jeden Andruckhebel 52 ist eine eigene Zugfeder 68 vorgesehen. Alle Zugfedern 68 sind an einem Bügel 69 aufgehängt.

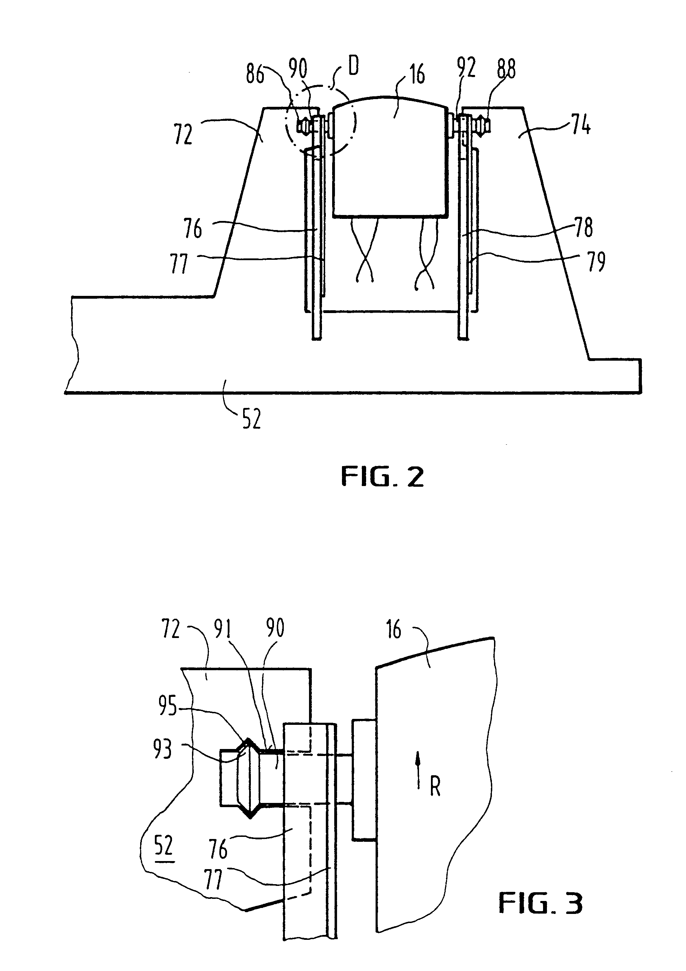

Der andere Schenkel 70 des im wesentlichen U-förmigen Andruckhebels 52 ist gabelförmig ausgebildet und trägt an seinen Gabelenden 72 und 74 den Wandlerkopf 16. Dieser wird zusammen mit dem Andruckhebel 52 mittels der Führungsbleche 76 und 78 in Andruckrichtung des Wandlerkopfes 16 verschieblich geführt. Die Lagerung und Führung des Wandlerkopfes 16 wird an Hand der Fig. 2 bis 5 noch näher erläutert werden.

An seinem freien Ende 80 ist der Andruckhebel 52 mit einer Anschlagnase 82 versehen. Diese kommt an einer ortsfesten Anschlagachse 84 zur Anlage und begrenzt auf diese Weise den Schwenkweg des Andruckhebels 52 zur Magnetkartenebene 58 hin.

Der Andruckhebel 52 ist ein flächiges Segment mit Flächenerstreckung normal zur Magnetkartenebene 58. Dies hat den Vorteil, daß der Andruckhebel 52 in Andruckrichtung des Wandlerkopfes 16 eine hohe Biegesteifigkeit hat, so daß unerwünschte Schwingungen des Magnetkopfes 16 in Andruckrichtung vermieden werden können. Die Ausbildung des Andruckhebels 52 als flächiges Segment hat weiter den Vorteil, daß dieser beispielsweise als Blechstanzteil sehr kostengünstig gefertigt werden kann.

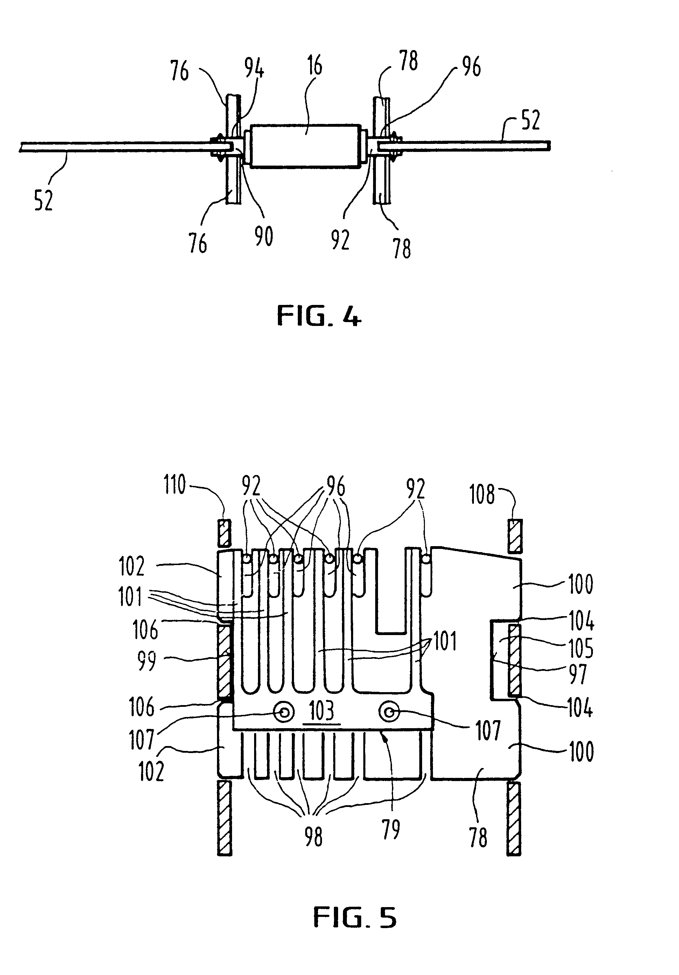

In Fig. 2 ist zu erkennen, wie der Wandlerkopf 16 in den Gabelenden 72 und 74 des Andruckhebels 52 angeordnet ist. Es ist in den Gabelenden 72 und 74 jeweils eine im Querschnitt im wesentlichen U-förmige Nut 86 und 88 vorgesehen, in denen die Lagerzapfen 90 und 92 des Wandlerkopfes 16 angeordnet sind. In diesen Nuten 86 und 88 sind die Lagerzapfen 90 und 92 in Andruckrichtung des Wandlerkopfes 16 spielfrei gehalten. In Richtung quer zur Bewegungsrichtung der Magnetkarte 14 sind die Lagerzapfen 90 und 92 in den Nuten 86 und 88 verschieblich. Diese Bewegung des Wandlerkopfes 16 und somit auch der Lagerzapfen 90 und 92 wird durch die Führungsbleche 76 und 78 und durch Federkämme 77 und 79 begrenzt, wie an Hand von Fig. 5 noch näher erläutert werden wird.

Fig. 3 zeigt die Lagerung und Führung des Lagerzapfens 90 des Wandlerkopfes 16 in der im Gabelende 72 des Andruckhebels 52 vorgesehenen Nut 86 an Hand des Detailausschnittes D von Fig. 2 besonders deutlich. Wie aus der Figur ersichtlich, ist der Lagerzapfen 90 an seiner Umfangsfläche 91 in Umfangsrichtung ringförmig mit einer Erhebung 93 mit dreieckförmigem Querschnitt versehen, die in einer entsprechenden Aussparung 95 des Andruckhebels 52 geführt ist. Es läßt sich dadurch eine in axialer Richtung des Lagerzapfens 90 spielfreie Lagerung des Wandlerkopfes 16 realisieren. In Andruckrichtung R des Wandlerkopfes 16 ist der Lagerzapfen 90 mittels des Führungsbleches 76 und des Federkammes 77 verschieblich geführt.

In Fig. 4 ist zu erkennen, daß die Dicke des Andruckhebels 52 kleiner ist als der Durchmesser der Lagerzapfen 90 bzw. 92. Dies ist erforderlich, damit die Lagerzapfen 90 und 92 in den Führungsschlitzen 94 und 96 (siehe dazu auch Fig. 5) der Führungsbleche 76 und 78 unmittelbar an den Punkten geführt werden können, an denen sie auch in den Nuten 86 und 88 gehalten sind.

In Fig. 5 ist das Führungsblech 78 samt Federkamm 79 von Fig. 1 aus Blickrichtung A dargestellt. Es sind die Führungsschlitze 96 zu erkennen, in denen die Lagerzapfen 92 eines aus sechs einzelnen Wandlerköpfen bestehenden Vielfachmagnetkopfes geführt sind. Mit 98 sind Aussparungen im Führungsblech 78 bezeichnet, in denen die Andruckhebel 52 (Fig. 1) der einzelnen Wandlerköpfe zusätzlich in deren Andruckrichtung verschieblich geführt sind.

Der Federkamm 79 besteht aus sechs blattförmigen Federelementen 101, die durch eine ihnen gemeinsame Halterung 103 miteinander verbunden sind, mit der er mit Nieten bzw. Schrauben 107 am Führungsblech 78 befestigt ist. Durch die den Führungsschlitzen 96 zugeordneten Federelemente 101 werden die Lagerzapfen 92 jeweils an die in der Figur rechte Innenwand der Führungsschlitze 96 gedrückt, wodurch etwaige Fertigungstoleranzen der Führungsschlitze 96 und der Lagerzapfen 92 egalisiert werden.

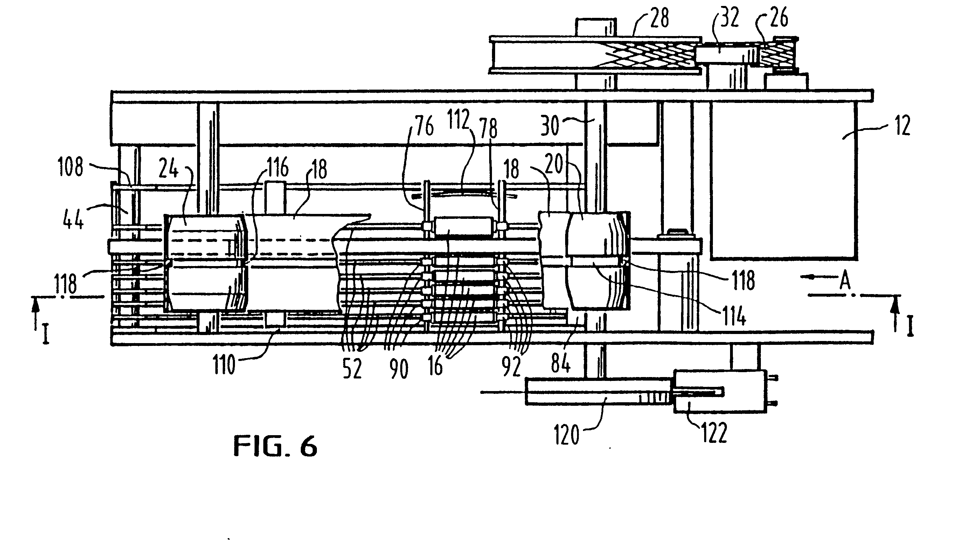

Das Führungsblech 78 ist ebenso wie auch das Führungsblech 76 (nicht dargestellt) an seinen etwa normal zur Aufzeichnungsträgerebene verlaufenden Kanten 97 und 99 (siehe dazu auch Fig. 1) mit Laschen 100 bzw. 102 versehen. Diese werden in Ausnehmungen 104 bzw. 106 von inneren Längswänden 108 und 110 des Magnetkartenlesegerätes verankert. Dabei werden zunächst die im Vergleich zu den Laschen 102 um mindestens eine Längswanddicke längeren Laschen 100 in die Ausnehmungen 104 eingeführt. Anschließend werden die kürzeren Laschen 102 in die Ausnehmungen 106 eingesteckt. Dadurch ergibt sich zwischen dem Führungsblech 78 und der Längswand 108 ein Freiraum 105, in dem eine Querblattfeder 112 (Fig. 6) angeordnet werden kann. Diese drückt dann das Führungsblech 78 in Richtung zur Längswand 110, so daß es in seiner Lage genau fixiert ist. Die lösbare Befestigung der Führungsbleche 76 und 78 ermöglicht es, daß die einzelnen Andruckhebel 52 samt ihren Wandlerköpfen 16 nach Herausnahme der Führungsbleche 76 und 78 bzw. nach Aushängen der Zugfedern 68 aller Andruckhebel 52 ausgeschwenkt werden können, so daß die Wandlerköpfe beispielsweise zu Reinigungszwecken leicht zugänglich sind (siehe dazu auch Fig. 1).

In Fig. 6 ist eine Draufsicht des Magnetkartenlesegerätes gezeigt. An Hand dieser Darstellung soll die Anordnung der einzelnen Andruckhebel 52, der einzelnen Wandlerköpfe 16 und der beiden Führungsbleche 76 und 78 im Magnetkartenlesegerät nochmals verdeutlicht werden. Es sind der Antriebsmotor 12, der Antriebsriemen 26, die Spannrolle 32 und das Riemenrad 28 zu erkennen, über deren Antriebsachse 30 die Antriebsrolle 20 angetrieben wird, die ihrerseits das nur bruchstückhaft dargestellte Förderband 18 antreibt, das an der Umlenkrolle 24 umgelenkt wird. Sowohl die Antriebsrolle 20 als auch die Umlenkrolle 24 sind etwa mittig mit einer Umfangsrille 114 bzw. 116 versehen, in der jeweils eine Führungsrippe 118 des Förderbandes 18 läuft. Diese Führungsrippe 118 verhindert das seitliche Abdriften des Förderbandes 18. Mit 108 bzw. 110 sind die inneren Längswände des Magnetkartenlesegerätes bezeichnet, in denen die Führungsbleche 76 und 78 verankert sind. Die einzelnen Andruckhebel 52 sind jeweils an der Schwenkachse 44 schwenkbar gelagert. Ihr Schwenkweg in Richtung zur Magnetkartenebene 58 (Fig. 1) hin wird durch die Anschlagachse 84 begrenzt. Mit 120 ist eine Taktscheibe bezeichnet, die teilweise im Inneren einer Lichtschranke 122 verläuft. Diese Anordnung aus Taktscheibe 120 und Lichtschranke 122 stellt einen genauen Drehzahlmesser dar, der für die Gleichlaufregelung des Antriebsmotors 12 benötigt wird.

Die inneren Längswände 108, 110 sind ebenfalls auf der Schwenkachse 44 gelagert. Dadurch bilden sie gemeinsam mit den Andruckhebeln 52 und den Wandlerköpfen 16 eine Baugruppe, die z. B. zu Reinigungszwecken um die Achse 44 ausgeschwenkt werden kann.

Die Draufsicht auf die Andruckvorrichtung zeigt die starre Führungs- und Haltevorrichtung der einzelnen Wandlerköpfe 16 besonders deutlich. Die Wandlerköpfe 16 werden sowohl in Bewegungsrichtung als auch quer zur Bewegungsrichtung der Magnetkarte (nicht dargestellt) spielfrei geführt. Sie haben nur die erwünschten Bewegungsfreiheitsgrade, so daß sie einerseits normal zur Magnetkartenebene ausgelenkt werden können und andererseits um die Schwenkachse der Lagerzapfen 90 und 92 schwenkbar sind. Da die Lagerzapfen 90 und 92 zur Begrenzung einer Bewegung der Wandlerköpfe 16 quer zur Bewegungsrichtung der Magnetkarte in den Führungsschlitzen 94 und 96 (Fig. 3) der in genau definierter Lage im Magnetkartenlesegerät angeordneten Führungsbleche 76 und 78 mit grosser Genauigkeit geführt sind, ist ein Verkanten der Andruckhebel 52 ausgeschlossen, wodurch eine reibungshysteresefreie Führung der Wandlerköpfe 16 gewährleistet ist.

## Patentansprüche

1. Vorrichtung zum Andrücken mindestens eines elektromagnetischen Wandlerkopfes (16) an einen relativ zu ihm bewegten Aufzeichnungsträger (14), mit einem den Wandlerkopf tragenden schwenkbaren Andruckhebel (52), der in Bewegungsrichtung des Aufzeichnungsträgers verläuft und durch Federkraft zum Aufzeichnungsträger hin beaufschlagt ist, und mit stationären Führungselementen (76, 78) zur Begrenzung einer Bewegung des Wandlerkopfes quer zur Bewegungsrichtung des Aufzeichnungsträgers, dadurch gekennzeichnet, daß der Wandlerkopf (16) mit an ihm angebrachten Lagerzapfen (90, 92) am Andruckhebel (52) gehalten ist, die im angedrückten Zustand des Wandlerkopfes (16) eine parallel zur Bewegungsrichtung des Aufzeichnungsträgers liegende Schwenkachse definieren und in Führungsschlitzen (94, 96) zweier Führungsbleche (76, 78) mit Flächenerstreckung normal zur Ebene des Aufzeichnungsträgers (14) sowie quer zu dessen Bewegungsrichtung in Andruckrichtung verschieblich geführt sind.

2. Vorrichtung nach Anspruch 1, dadurch gekennzeichnet, daß der Andruckhebel (52) im wesentlichen U-förmig ausgebildet ist, daß das freie Ende (54) des einen Schenkels (56) nahe der Aufzeichnungsträgerebene (58) schwenkbar gelagert ist und daß das freie Ende (72, 74) des anderen Schenkels (70) den Wandlerkopf (16) trägt.

3. Vorrichtung nach Anspruch 2, dadurch gekennzeichnet, daß der den Wandlerkopf (16) tragende Schenkel (70) gabelförmig ausgebildet ist und daß in den Gabelenden (72, 74) die Lagerzapfen (90, 92) des Wandlerkopfes (16) angeordnet sind.

4. Vorrichtung nach einem der vorhergehenden Ansprüche, dadurch gekennzeichnet, daß der Andruckhebel (52) nahe seinem freien Ende (80) mit einer Anschlagnase (82) versehen ist, die seinen Schwenkweg zum Aufzeichnungsträger (14) hin begrenzt.

5. Vorrichtung nach einem der vorhergehenden Ansprüche, dadurch gekennzeichnet, daß der Andruckhebel (52) ein flächiges Segment mit Flächenerstreckung normal zur Ebene des Aufzeichnungsträgers (14) ist.

6. Vorrichtung nach Anspruch 5, dadurch gekennzeichnet, daß die Dicke des Andruckhebels (52) zumindest im Bereich (72, 74) der Lagerzapfenhalterung kleiner als der Durchmesser der Lagerzapfen (90, 92) des Wandlerkopfes (16) ist.

7. Vorrichtung nach einem der vorhergehenden Ansprüche, dadurch gekennzeichnet, daß mindestens ein Lagerzapfen (90) eines Wandlerkopfes (16) an seiner Umfangsfläche (91) mit mindestens einer in Umfangsrichtung verlaufenden Erhebung (93) versehen ist, die in einer entsprechenden Aussparung (95) des Andruckhebels (52) geführt ist.

8. Vorrichtung nach Anspruch 7, dadurch gekennzeichnet, daß die Erhebung (93) einen dreieckförmigen Querschnitt hat.

9. Vorrichtung nach Anspruch 7 oder 8, dadurch gekennzeichnet, daß die Erhebung (93) in Umfangsrichtung ringförmig ausgebildet ist.

10. Vorrichtung nach einem der vorhergehenden Ansprüche, dadurch gekennzeichnet, daß der Andruckhebel (52) an einer Schwenkachse (44) mittels eines Langloches (60) gelagert ist, dessen Längskanten (62, 64) in Richtung normal zur Ebene des Aufzeichnungsträgers (14) konvergieren und an einem Langlochende (66) einen Abstand zueinander haben, der kleiner als der Durchmesser der Schwenkachse (44) ist.

11. Vorrichtung nach einem der Ansprüche 2 bis 10, dadurch gekennzeichnet, daß der Andruckhebel (52) durch eine Zugfeder (68) zum Aufzeichnungsträger (14) hin belastet ist.

12. Vorrichtung nach einem der vorhergehenden Ansprüche, dadurch gekennzeichnet, daß die Führungsbleche (76, 78) mittels an ihren etwa normal zur Ebene des Aufzeichnungsträgers (14) verlaufenden Kanten (97, 99) angeordneter Befestigungselemente (100, 102) querbeweglich geführt sind.

13. Vorrichtung nach Anspruch 12, dadurch gekennzeichnet, daß die Führungsbleche (76, 78) durch eine Querfeder (112) in Richtung quer zur Bewegungsrichtung des Aufzeichnungsträgers (14) beaufschlagt sind.

14. Vorrichtung nach einem der vorhergehenden Ansprüche, dadurch gekennzeichnet, daß in den Führungsblechen (76, 78) Aussparungen (98) vorgesehen sind, in denen der Andruckhebel (52) in Andruckrichtung verschieblich geführt ist.

15. Vorrichtung nach einem der vorhergehenden Ansprüche, dadurch gekennzeichnet, daß den Führungsschlitzen (94, 96) Federelemente (101) zugeordnet sind, die die Lagerzapfen (90, 92) an jeweils eine Führungsschlitzinnenwand andrücken.

16. Vorrichtung nach Anspruch 15, dadurch gekennzeichnet, daß die Federelemente (101) stab- bzw. blattförmig ausgebildet sind.

17. Vorrichtung nach Anspruch 16 zum Andrükken mehrerer elektromagnetischer Wandlerköpfe an einen relativ zu ihnen bewegten Aufzeichnungsträger, dadurch gekennzeichnet, daß mehrere stab- bzw. blattförmige Federelemente (101) durch eine gemeinsame, sie verbindende Halterung (103) zu einem Federkamm (79) vereinigt sind.

18. Vorrichtung nach einem der Ansprüche 10 bis 17, dadurch gekennzeichnet, daß Längswände (108, 110) die die Vorrichtung beiderseits einschließen, auf der Schwenkachse (44) des Andruckhebels (52) gelagert sind.

**Claims**

1. Device for pressing at least one electromagnetic transducer head (16) against a recording carrier (14) which is being moved relatively to the transducer head, with a pivotable pressure lever (52) carrying the transducer head, which extends in the direction of movement of the recording carrier, being biased by spring force towards the recording carrier, and with stationary guide elements (76, 78) for limiting a movement of the transducer head transversely of the direction of movement of the recording carrier, characterized in that the transducer head (16) is mounted on the pressure lever (52) by bearing journals (90, 92) which are mounted on it and which, in the pressed state of the transducer head (16), define a pivot axis which is parallel with the direction of movement of the recording carrier, the bearing journals (90, 92) being guided for displacement in the direction of pressure application in guide slots (94, 96) in two guide plates (76, 78) having a two-dimensional extension at right angles to the plane of the recording carrier (14) as well as transversely to the direction of movement thereof.

2. Device according to claim 1, characterized in that the pressure lever (52) is substantially U-shaped and in that the free end (54) of one arm (56) is pivotably mounted close to the recording carrier plane (58) and in that the free end (72, 74) of the other arm (70) carries the transducer head (16).

3. Device according to claim 2, characterized in that the arm (70) carrying the transducer head (16) is bifurcated and in that the bearing journals (90, 92) of the transducer head (16) are arranged in the fork ends (72, 74).

4. Device according to one of the preceding claims, characterized in that the pressure lever (52) is, close to its free end (80), provided with an abutment nose (82) which limits its pivoting path in the direction of the recording carrier (14).

5. Device according to one of the preceding claims, characterized in that the pressure lever (52) is a flat segment extending flat at a right angle to the plane of the recording carrier (14).

6. Device according to claim 5, characterized in that the thickness of the pressure lever (52) is smaller than the diameter of the bearing journals (90, 92) of the transducer head (16), at least in the region (72, 74) of the bearing journal mounting.

7. Device according to one of the preceding claims, characterized in that at least one bearing journal (90) of a transducer head (16) is provided on its peripheral surface (91) with at least one raised portion (93) extending in a peripheral direction and which is guided in a corresponding recess (95) of the pressure lever (52).

8. Device according to claim 7, characterized in that the raised portion (93) is of triangular cross-section.

9. Device according to claim 7 or 8, characterized in that the raised portion (93) is constructed annularly in a peripheral direction.

10. Device according to one of the preceding claims, characterized in that the pressure lever (52) is mounted on a pivot spindle (44) by means of an elongated hole (60), the longitudinal edges (62, 64) of which converge in a direction at right angles to the plane of the recording carrier (14), being spaced apart at one end (66) of the elongated hole by a distance which is smaller than the diameter of the pivot spindle (44).

11. Device according to one of claims 2 to 10, characterized in that the pressure lever (52) is biased by a draw spring (68) in the direction of the recording carrier (14).

12. Device according to one of the preceding claims, characterized in that the guide plates (76, 78) are guided for transverse movement by means of fixing elements (100, 102) disposed on the edges (97, 99) which extend substantially at right angles to the plane of the recording carrier (14).

13. Device according to claim 12, characterized in that the guide plates (76, 78) are biased by a transverse spring (112) in a direction crosswise to the direction of movement of the recording carrier (14).

14. Device according to one of the preceding claims, characterized in that there are provided recesses (98) in the guide plates (76, 78), in which the pressure lever (52) is guided for displacement in the direction in which the pressure is applied.

15. Device according to one of the preceding claims, characterized in that there are associated with the guide slots (94, 96) spring elements (101) which press the bearing journals (90, 92) on respective inside walls of guide slots.

16. Device according to claim 15, characterized in that the spring elements (101) are rod-shaped or leaf-shaped.

17. Device according to claim 16, for pressing a plurality of electromagnetic transducer heads against a recording carrier which is being moved relatively to them, characterized in that a plurality of rod-shaped or leaf-shaped spring elements (101) are combined by a common connecting holder (103) to form one spring comb (79).

18. Device according to one of claims 10 to 17, characterized in that longitudinal walls (108, 110) which enclose the device on both sides are mounted on the pivot spindle (44) of the pressure lever (52).

**Revendications**

1. Dispositif pour presser au moins une tête de tranducteur (16) électromagnétique sur un support d'enregistrement (14) en mouvement relatif par rapport à elle, avec un levier presseur (52) pivotant, portant la tête de transducteur, qui s'étend dans le sens du mouvement du support d'enregistrement et qui est rappelé par un ressort en direction du support d'enregistrement, et avec des éléments de guidage (76, 78) stationnaires pour limiter un mouvement de la tête de transducteur transversalement au sens du mouvement du support d'enregistrement, caractérisé en ce que la tête de transducteur (16) est tenue sur le levier presseur (52) par des tourillons (90, 92), placés sur cette même tête, qui, lorsque la tête de transducteur (16) est en position de pression, définissent un axe de pivotement situé parallèlement au sens du mouvement du support d'enregistrement et qui sont guidés pour coulisser dans le sens de la pression dans des fentes de guidage (94, 96) de deux tôles de guidage (76, 78) à surfaces s'étendant perpendiculairement au plan du support d'enregistrement (14) ainsi que transversalement au sens de déplacement de celui-ci.

2. Dispositif selon la revendication 1, caractérisé en ce que le levier presseur (52) a essentiellement la configuration d'un U, l'extrémité libre (54) de l'une des branches (56) est montée pivotante à proximité du plan du support d'enregistrement (58) et l'extrémité libre (72, 74) de l'autre branche (70) porte la tête de transducteur (16).

3. Dispositif selon la revendication 2, caractérisé en ce que la branche (70) portant la tête de transducteur (16) a une configuration en fourche et les tourillons (90, 92) de la tête de transducteur (16) sont disposés dans les extrémités (72, 74) de la fourche.

4. Dispositif selon l'une quelconque des revendications précédentes, caractérisé en ce que le levier presseur (52) est pourvu à proximité de son extrémité libre (80) d'un talon de butée (82) qui limite son mouvement de pivotement vers le support d'enregistrement (14).

5. Dispositif selon l'une quelconque des revendications précédentes, caractérisé en ce que le levier presseur (52) est un segment plan à surface s'étend perpendiculairement au plan du support d'enregistrement (14).

6. Dispositif selon la revendication 5, caractérisé en ce que, au moins dans la zone (72, 74) des paliers des tourillons, l'épaisseur du levier presseur (52) est plus petite que le diamètre des tourillons (90, 92) de la tête de transducteur (16).

7. Dispositif selon l'une quelconque des revendications précédentes, caractérisé en ce qu'au moins un tourillon (90) d'une tête de transducteur (16) est pourvu sur sa surface périphérique (91) d'au moins un renflement (93) s'étendant en sens périphérique qui est guidé dans un évidement (95) correspondant du levier presseur (52).

8. Dispositif selon la revendication 7, caractérisé en ce que le renflement (93) a une section droite triangulaire.

9. Dispositif selon la revendication 7 ou 8, caractérisé en ce que le renflement (93) a une configuration annulaire dans le sens périphérique.

10. Dispositif selon l'une quelconque des revendications précédentes, caractérisé en ce que le levier presseur (52) est guidé par un axe de pivotement (44) au moyen d'un trou oblong (60) dont les bords longitudinaux (62, 64) convergent dans une direction normale au plan du support d'enregistrement (14) et ont à une extrémité du trou longitudinal (66) un écartement l'un par rapport à l'autre qui est inférieur au diamètre de l'axe de pivotement (44).

11. Dispositif selon l'une quelconque des revendications 2 à 10, caractérisé en ce que le levier presseur (52) est rappelé par un ressort de traction (68) vers le support d'enregistrement (14).

12. Dispositif selon l'une quelconque des revendications précédentes, caractérisé en ce que les tôles de guidage (76, 78) sont guidées en déplacement transversal au moyen d'éléments de fixation (100, 102) disposés sur leurs bords (97, 99) s'étendant sensiblement perpendiculairement au plan du support d'enregistrement (14).

13. Dispositif selon la revendication 12, caractérisé en ce que les tôles de guidage (76, 78) sont sollicitées par un ressort transversal (112) dans un sens transversal par rapport à la direction du mouvement du support d'enregistrement (14).

14. Dispositif selon l'une quelconque des revendications précédentes, caractérisé en ce que sont prévus dans les tôles de guidage (76, 78) des évidements (98) dans lesquels le levier presseur (52) est guidé en coulissement dans le sens de la pression.

15. Dispositif selon l'une quelconque des revendications précédentes, caractérisé en ce que sont associés aux fentes de guidage (94, 96) des éléments à ressorts (101) qui serrent les tourillons (90, 92) contre une paroi intérieure respective d'une fente de guidage.

16. Dispositif selon la revendication 15, caractérisé en ce que les éléments à ressorts (101) ont une configuration de barre ou de feuille.

17. Dispositif selon la revendication 16, pour presser plusieurs têtes de transducteur électromagnétique contre un support d'enregistrement en mouvement relatif par rapport à elle, caractérisé en ce que plusieurs éléments à ressorts (101) à configuration de barre ou de feuille sont réunis par un support commun (103) qui les assemble pour composer un peigne à ressorts.

18. Dispositif selon l'une quelconque des revendications 10 à 17, caractérisé en ce que des parois longitudinales (108, 110) qui contiennent le dispositif de deux côtés sont montées sur l'axe de pivotement (44) du levier presseur (52).

FIG. 1

FIG. 2

FIG. 3

FIG. 4

FIG. 5

15

FIG. 6